# EUROPÄISCHE PATENTSCHRIFT

(11) **EP 2 527 237 B1**
(45) Veröffentlichungstag und Bekanntmachung des Hinweises auf die Patenterteilung: **21.08.2013**
(21) Anmeldenummer: 11004390.8
(22) Anmeldetag: 27.05.2011
(51) Int. Cl.: B62K 11/10, B62K 25/28, B62M 7/12, B62M 9/04, F16H 57/02

(54) **Triebsatzschwinge mit zweistufigem Kettengetriebe**
Swinging arm motor unit with two stage chain drive
Bras oscillant doté d'une transmission par chaîne à deux niveaux

(43) Veröffentlichungstag der Anmeldung: 28.11.2012
(73) Patentinhaber: iwis motorsysteme GmbH & Co. KG, 81369 München (DE)
(72) Erfinder: Frank, Michael, 83624 Otterfing (DE); Hirschmann, Volker, 82256 Fürstenfeldbruck (DE)
(74) Vertreter: Grünecker, Kinkeldey, Stockmair & Schwanhäusser

(56) Entgegenhaltungen:
- WO-A1-2009/109774
- CN-U- 201 516 909
- CN-U- 201 784 785
- CN-Y- 201 380 943
- US-A- 5 853 058
- US-B1- 6 341 660

## Beschreibung

Die Erfindung betrifft eine Triebsatzschwinge zum schwenkbaren Anbringen eines Antriebsrads an einem Fahrzeugrahmen, insbesondere eines Elektromotorrollers, umfassend mindestens einen Elektromotor mit einer Motorwelle, die mindestens ein erstes, mit dieser drehfest verbindbares Motorantriebsrad aufweist, eine Getriebewelle, die mindestens ein erstes Getrieberad aufweist, wobei das erste Motorantriebsrad und das erste Getrieberad mittels eines ersten flexiblen Treibmittels verbunden sind, und eine Abtriebswelle die mittels einer Drehmomentübertragungseinrichtung mit der Getriebewelle verbunden ist, wobei mittels der Abtriebswelle das Antriebsrad antreibbar ist, sowie ein Basiskörper, der verschwenkbar am Fahrzeugrahmen positionierbar ist, wobei in oder am Basiskörper der Elektromotor, die Getriebewelle und die Abtriebswelle positioniert sind.

Derartige Triebsatzschwingen werden bevorzugt eingesetzt um Elektromotorroller anzutreiben. Denkbar ist aber auch die Nutzung bei mehrspurigen Fahrzeugen. Hierzu könnte jedes angetriebene Rad jeweils einer Triebsatzschwinge zugeordnet sein. Auch wäre denkbar, mehrere Räder an der Triebsatzschwinge anzubringen.

Triebsatzschwingen sind üblicherweise derart gestaltet, dass der Basiskörper am Fahrzeugrahmen montierbar ist und an seinem gegenüberliegenden Ende ein angetriebenes Rad trägt. Die für die Funktion der Triebsatzschwinge notwendigen Elemente, d.h. Motor sowie Getriebeelemente sind üblicherweise am oder im Basiskörper positioniert.

Aus der deutschen Patentanmeldung DE 197 51 371 A1 ist ein Elektromotorroller mit einer Triebsatzschwinge bekannt. Der Elektromotorroller trägt Stromspeicher, wie z.B. Batterien oder Akkumulatoren, mittels deren der in der Triebsatzschwinge angeordnete Elektromotor angetrieben wird. Um das Antriebsrad anzutreiben, wirkt der Elektromotor auf einen ersten Zugmitteltrieb, an den sich ein zweiter Zugmitteltrieb anschließt der auf die Antriebswelle wirkt. Zwischen erstem und zweitem Zugmitteltrieb ist ein Freilauf positioniert. Mittels des Freilaufs kann der Elektromotor im Schiebebetrieb vom Antriebsrad entkoppelt werden. Der Elektromotor sowie erster und zweiter Zugmitteltrieb sind in bzw. an einem Schwingengehäuse angeordnet.

Die chinesischen Patentanmeldungen CN 201 516 909, auf der der Oberbegriff von Anspruch 1 basiert, und CN 201784785 zeigen Anordnungen für Triebsatzschwingen von z. B. Elektromotorrollern. Dabei treibt ein Elektromotor eine Motorwelle mit jeweils zwei Kettenrädern an. Auf der Motorwelle sitzt des Weiteren eine Fliehkraftkupplung. Auf einer Getriebewelle sind zwei Getriebekettenräder angeordnet, die jeweils mit den beiden Motorkettenrädem verbunden sind. Das Drehmoment wird mittels eines weiteren Kettenrads auf der Getriebewelle auf die Abtriebswelle übertragen. Auf der Getriebewelle ist entweder eines oder beide Getriebekettenräder mittels eines Freilaufs bzw. einer Einwege-Kupplung versehen.

Um eine alltagstaugliche Reichweite zu erreichen, muss der Elektromotorroller eine gewisse Anzahl an Stromspeichem mit sich führen. Die derzeit verfügbaren Stromspeicher haben aber ein hohes Gewicht. Ein Elektroroller mit ausreichender Reichweite hat deshalb in der Regel ein hohes Gewicht, was sich negativ auf die Fahreigenschaften auswirkt. Legt der Nutzer jedoch Wert auf einen Roller mit niedrigem Gewicht, so ist die Reichweite häufig unbefriedigend. Die Hersteller von Elektromotorrollern sind deshalb ständig bestrebt, das Gewicht aller Komponenten, also auch der Triebsatzschwinge zu verringern. Einerseits können durch niedrigeres Gewicht bessere Fahreigenschaften erreicht werden. Andererseits bietet das an anderer Stelle eingesparte Gewicht die Möglichkeit, zusätzliche Stromspeicher mitzuführen und die Reichweite zu verbessern, ohne das Gesamtgewicht zu erhöhen.

Es ist deshalb Aufgabe der Erfindung, eine Triebsatzschwinge der eingangs genannten Art bereitzustellen, die eine gleichmäßige Kraftverteilung ermöglicht.

Diese Aufgabe ist mittels einer Triebsatzschwinge mit den Merkmalen des unabhängigen Anspruchs 1 gelöst. Die Triebsatzschwinge weist hierzu an der Motorwelle mindestens ein zweites, mit der Motorwelle drehfest verbindbares Motorantriebsrad auf, sowie an der Getriebewelle mindestens ein zweites Getrieberad auf, wobei das zweite Motorantriebsrad und das zweite Getrieberad mittels eines zweiten flexiblen Treibmittels verbunden sind, wobei die Getriebewelle ferner eine Kupplungsanordnung aufweist, mittels welcher zumindest wahlweise ein Drehmomentfluss vom ersten Motorantriebsrad zur Abtriebswelle oder vom zweiten Motorantriebsrad zur Abtriebswelle einstellbar ist. Die Motorwelle weist einen ersten und einen zweiten Endbereich auf, die sich beide aus dem Elektromotor erstrecken, wobei am ersten Endbereich mindestens das erste Motorantriebsrad und am zweiten Endbereich mindestens das zweite Motorantriebsrad angeordnet ist. Auf jedem der Endbereiche ist mindestens eines der Motorantriebsräder positioniert.

Mit einer solchen Triebsatzschwinge wird die Möglichkeit geschaffen, einen kleineren Elektromotor zu nutzen als in den bisher bekannten Triebsatzschwingen. Die bisher in Triebsatzschwingen genutzten Elektromotoren waren dazu ausgelegt, in jeder Betriebssituation das notwendige Drehmoment bereitzustellen, das mittels einer festen, unvariablen Übersetzung an das Hinterrad übertragen wurde. Mittels des nun vorgeschlagenen Aufbaus der Triebsatzschwinge kann ein kleinerer, ggf. schwächerer Motor genutzt werden, dessen Drehmoment mittels einer Getriebeanordnung übertragen wird. Trotz der nun notwendigen Getriebeanordnung ergibt sich dennoch eine Gewichtsersparnis im Vergleich zu den bisher bekannten Triebsatzschwingen. Eine erfindungsgemäße Gestaltung erleichtert die Lagerung der Motorwelle im Motorgehäuse, da die Lasten zu beiden Seiten der Motorwelle eingeleitet werden und sich dadurch eine gleichmäßige Kraftverteilung ergibt. Zudem bietet diese Anordnung die Möglichkeit, bei einem einspurigen Fahrzeug den Elektromotor auf der Fahrzeuglängsachse, d.h. auf einer gedachten Linie zwischen Vorder- und Hinterrad zu positionieren. Hinsichtlich des Fahrverhaltens ist dies zu bevorzugen.

Entsprechend der erfindungsgemäßen Lösung, weist die Motorwelle also mindestens zwei Motorantriebsräder auf, welchen auf der Getriebewelle jeweils ein Getrieberad zugeordnet ist, wobei das jeweilige Motorantriebsrad mittels eines flexiblen Treibmittels, insbesondere eines Riemens oder einer Kette mit dem jeweiligen Getrieberad verbunden ist. Hierdurch ergeben sich von der Motorwelle zur Getriebewelle mindestens zwei Übertragungswege. Das derart auf die Getriebewelle übertragene Drehmoment wird mittels einer Drehmomentübertragungseinrichtung, wie beispielsweise einer Kette, einem Riemen oder auch einer Kardanwelle, auf die Abtriebswelle übertragen. Hierzu ist an der Getriebewelle eine Kupplungsanordnung vorgesehen, die jeweils das Drehmoment des ersten Getrieberades oder des zweiten Getrieberades auf die Getriebewelle schalten kann, womit das Abtriebsrad angetrieben ist. Entsprechend ist die Kupplungsanordnung wahlweise umschaltbar, um eines der Getrieberäder einzukuppeln und das eine andere, bzw. die anderen Getrieberäder auszukoppeln. Der Basiskörper dient als Trägerelement, um die verbleibenden Elemente der Triebsatzschwinge zu tragen.

Weiter kann vorgesehen sein, dass die mindestens zwei Motorantriebsräder zumindest in Antriebsrichtung des Elektromotors dauerhaft drehfest verbunden sind. Dreht sich also der Elektromotor in die entsprechende Drehrichtung, um das Elektrofahrzeug in die übliche Bewegungsrichtung, d.h. vorwärts anzutreiben, so übertragt zumindest das jeweils mittels der Kupplungsanordnung eingekuppelte Motorantriebsrad das Drehmoment auf die Getriebewelle.

Ferner kann vorgesehen sein, dass das erste Abtriebsrad zwischen dem ersten Getrieberad und dem zweiten Getrieberad angeordnet ist. Sowohl das erste Abtriebsrad als auch die ersten und zweiten Getrieberäder sind an der Getriebewelle angeordnet. Dabei sitzt das Abtriebsrad zwischen den mindestens zwei Getrieberädern. Dies sorgt dafür, dass die Übertragung des Drehmoments auf das zweite Abtriebsrad fluchtend zum ersten Abtriebsrad erfolgen kann. Entsprechend sorgt diese Anordnung für eine optimale Nutzung des zur Verfügung stehenden, sehr begrenzten Bauraums.

Als weitere Alternative kann vorgesehen sein, dass der Basiskörper als Schwingengehäuse ausgebildet ist, das zumindest die Getriebewelle und die Abtriebswelle zumindest bereichsweise umfasst. Mittels eines Schwingengehäuses, in dem zumindest Elemente der Antriebsanordnung aufgenommen bzw. umfasst sind, können diese jeweiligen Elemente vor Schmutz geschützt sein. Die Lebensdauer der Treibmittel und Räder wird dadurch verlängert. Hierbei kann auch vorgesehen sein, dass das Schwingengehäuse alle sonstigen Elemente der Triebsatzschwinge aufnimmt, bzw. dass diese an ihr derart positioniert sind, dass der Antriebsstrang im Wesentlichen von Umwelteinflüssen isoliert ist.

Eine weitere Gestaltungsmöglichkeit ist, dass das erste Motorantriebsrad und das erste Getrieberad eine erste Über- oder Untersetzung aufweist und das zweite Motorantriebsrad und zweite Getrieberad eine zweite, von der ersten abweichende Über- oder Untersetzung aufweist. Es werden damit zwei Über/Untersetzungen der Motordrehzahl bzw. des Motordrehmoments erzeugt. Das gewünschte Drehmoment kann dann mittels der Kupplungsanordnung auf der Getriebewelle der Abtriebswelle zugeführt werden.

Ferner kann vorgesehen sein, dass die Motorwelle, die Getriebewelle sowie die Abtriebswelle parallel zueinander ausgerichtet sind. Dies führt zu einem einfachen Aufbau der Getriebeanordnung.

Auch kann vorgesehen sein, dass die Motorwelle, die Getriebewelle und die Abtriebswelle quer zur Fahrzeuglängsachse angeordnet sind. Dies macht aufwendige Anordnungen zur Übertragung des Drehmoments überflüssig.

Eine weitere alternative Gestaltungsmöglichkeit ist, dass ein Freilauf vorgesehen ist, welcher das Antriebsrad im Schiebebetrieb vom Elektromotor entkoppelt. Im Schiebebetrieb, d.h. wenn die am Elektromotor eingestellte Drehzahl geringer ist als die Drehzahl am Antriebsrad, sorgt der Freilauf dafür, dass der Elektromotor nicht zwangsweise angetrieben wird. Ansonsten würde die Motorwelle im Schiebebetrieb durch die Getriebeanordnung beschleunigt, wodurch der Motor nach Art eines Generators eine Spannung erzeugen würde. Dies würde einerseits die Steuerelektronik beeinflussen oder möglicherweise zerstören. Andererseits hat sich gezeigt, dass eine kurzzeitige Einspeisung von Energie in die Batterien bzw. Akkus des Elektrofahrzeugs nicht lohnt oder für die Lebensdauer der Batterien oder Akkus sogar schädlich sein kann. Der Freilauf sorgt deshalb für eine Entkoppelung, d.h. mechanische Trennung zumindest der Motorwelle von der Getriebeanordnung.

Ferner kann vorgesehen sein, dass der Freilauf ein Element der Kupplungsanordnung ist.

Als Gestaltungsvariante bietet sich an, das mindestens eines der flexiblen Treibmittel eine Kette oder ein Riemen ist. Ketten und Riemen haben sich in der Kraft- und Drehmomentübertragung bewährt. Sie sind wartungsarm bzw. wartungsfrei und günstig in der Herstellung. Sie bieten sich deshalb für eine Nutzung in der erfindungsgemäßen Triebsatzschwinge an.

Weiter ist möglich, das erste und zweite Abtriebsrad mittels eines dritten flexiblen Treibmittels zu verbinden. Dieses flexible Treibmittel kann eine Kette oder ein Riemen, wie z.B. ein Zahnriemen sein. Derartige Treibmittel sind kostengünstig in der Anschaffung, unkompliziert in Montage und Wartung, und haben sich für Übertragungsaufgaben bewährt.

Als weite Alternative kann ferner vorgesehen sein, dass die Getriebewelle mit mindestens einem ersten Abtriebsrad in Verbindung steht und die Abtriebswelle mindestens ein zweites Abtriebsrad aufweist, das mit dem ersten Abtriebsrad zum Übertragen eines Drehmoments verbunden ist.

Ferner kann vorgesehen sein, dass für ein Verhältnis zwischen einem Abstand A1 zwischen der Getriebewelle und der Abtriebswelle und einem Abstand A2 zwischen der Motorwelle und der Getriebewelle, gilt: A1 / A2 > 1, bevorzugt gilt A1 / A2 >2, und besonders bevorzugt A1 / A2 > 4. Bedingt durch die bei Motorrollern übliche Bauweise, lastet ein Großteil des Eigengewichts auf dem Hinterrad. Hinsichtlich des Fahrverhaltens wäre aber eine möglichst gleichmäßige Gewichtsverteilung zwischen Vorder- und Hinterrad wünschenswert. Mit dem zuvor genannten Verhältnis der Abstände wird es erreicht, die Motor- und Getriebewelle in Entfernung zur Abtriebswelle zu positionieren. Für eine ausge-wogene Gewichtsverteilung ist eine Positionierung zwischen Vorder- und Hinterrad, beabstandet zum Hinterrad vorteilhaft.

Im Folgenden werden die Ausführungsformen anhand der Zeichnungen näher beschrieben. Es zeigen:
- Fig. 1: eine Seitenansicht eines Elektromotorrollers mit der erfindungsgemäßen Triebsatzschwinge,
- Fig. 2: eine schematische Draufsicht auf eine erste Ausführungsform der Triebsatzschwinge,
- Fig. 3: eine schematische Seitenansicht einer erfindungsgemäßen Triebsatzschwinge nach Figur 3 und
- Fig. 4: eine schematische Draufsicht auf eine weitere Ausführungsform einer efindungsgemäßen Triebsatzschwinge,
- Fig. 5: eine schematische Draufsicht auf eine weitere Ausführungsform einer erfindungsgemäßen Triebsatzschwinge.

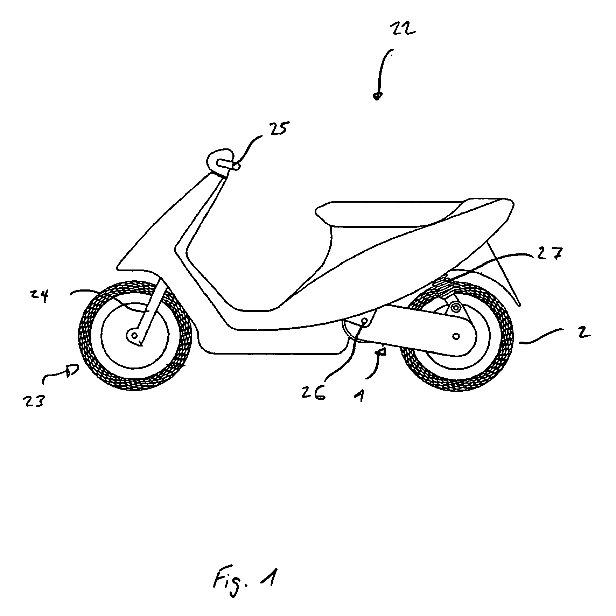

Fig. 1 zeigt einen Elektromotorroller 22, dessen Antriebsrad 2 an einer Triebsatzschwinge 1 angeordnet ist. Die wesentlichen Elemente des Elektromotorrollers sind aus Motorrollern bekannt, die mittels Verbrennungsmotoren angetrieben werden. So weist der Elektromotorroller beispielsweise eine lenkbares Vorderrad 23 auf, das an einer Federgabel 24 angeordnet ist. Gelenkt wird das Vorderrad mittels einer Lenkstange 25. Der Motorroller weist einen Rahmen auf, der in Fig. 1 nicht explizit dargestellt ist. Der Rahmen kann üblicherweise aus Stahlprofilen oder auf sonstige bekannte Art hergestellt sein. Der Rahmen weist eine Aufnahme für die Triebsatzschwinge 1 auf. Die Triebsatzschwinge 1 ist dabei um eine Achse 26 verschwenkbar gelagert, um beispielsweise Fahrbahnunebenheiten während der Fahrt abzufedern. Hierzu ist auch eine Feder-/Dämpfereinheit 27 bzw. ein sonstiges Feder/Dämpferelement zwischen Rahmen und Triebsatzschwinge angeordnet. Die Triebsatzschwinge 1 weist hierzu einen Basiskörper 13 auf, an dem die Feder-/Dämpfereinheit 27 befestigbar ist.

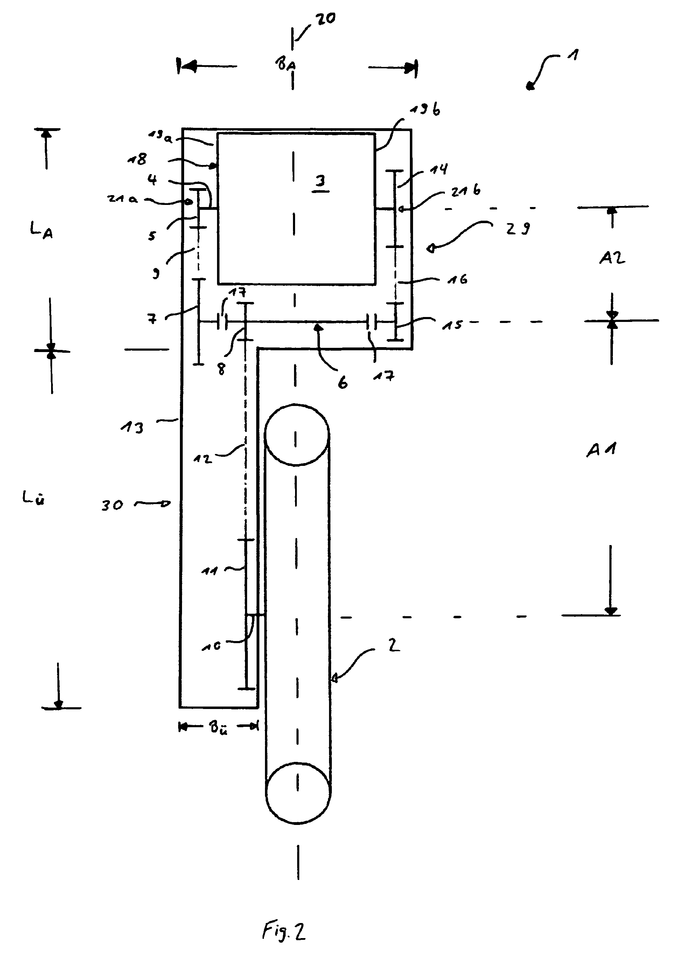

Fig. 2 zeigt den schematischen Aufbau einer ersten Ausführungsform der erfindungsgemäßen Triebsatzschwinge 1. Die Triebsatzschwinge 1 weist einen Basiskörper 13 auf, an oder in dem die Elemente der Triebsatzschwinge angeordnet sind. Im gezeigten Ausführungsbeispiel der Fig. 2 ist der Basiskörper 13 als Schwingengehäuse ausgebildet. D.h., zumindest manche Elemente der Triebsatzschwinge sind zumindest bereichsweise vom Schwingengehäuse umfasst. Insbesondere ist damit ein Schutz der Elemente der Triebsatzschwinge vor äußeren Einflüssen sichergestellt. Der Basiskörper ist zumindest in zwei Bereiche gegliedert. Einen Antriebsbereich 29 und den Übertragungsbereich 30. Im oder am Antriebsbereich 29 sind der Motor 3 und die Getriebewelle 6 sowie alle weiteren, diesen zugeordneten Elemente angeordnet. Der Übertragungsbereich 30 schließt sich an den Antriebsbereich 29 an und verläuft in Richtung des Antriebsrades. Am oder im Übertragungsbereich ist das Treibmittel 12, sowie die Abtriebswelle 10 und das zweite Abtriebsrad 11 angeordnet.

Der Elektromotor 3, welcher genutzt wird um das Antriebsrad 2 anzutreiben, ist im Antriebsbereich 29 angeordnet. Der Elektromotor 3 weist eine Motorwelle 4 auf. Im gezeigten Ausführungsbeispiel erstreckt sich die Motorwelle 4 mit zwei Endbereichen 21 a, 21 b zu jeweils zwei Seiten 19a, 19b aus dem Motorgehäuse 18. Dabei ist am ersten Endbereich 21a der Motorwelle 4 ein erstes Motorantriebsrad 5 positioniert. Am zweiten Endbereich 21 b der Motorwelle 4 ist ein zweites Motorantriebsrad 14 positioniert.

Parallel zur Motorwelle 4 ist eine Getriebewelle 6 angeordnet. Die Getriebewelle 6 weist ein erstes Getrieberad 7 sowie ein zweites Getrieberad 15 auf. Das erste Getrieberad 7 fluchtet mit dem ersten Motorantriebsrad 5. Ebenso fluchtet das zweite Getrieberad 15 mit dem zweiten Motorantriebsrad 14. Aufgrund der gewählten Anordnung ergibt es sich, dass die Motorwelle 4 gleichzeitig als sogenannte Getriebeeingangswelle dient.

Das erste Motorantriebsrad 5 ist mit dem ersten Getrieberad 7 im gezeigten Ausführungsbeispiel mit einer Kette verbunden. Ebenso ist das zweite Motorantriebsrad 14 mit dem zweiten Getrieberad 15 mit einer Kette verbunden. Die Motorantriebsräder und Getrieberäder können deshalb auch als Motorkettenräder und Getriebekettenräder bezeichnet werden. Das erste Motorantriebsrad bildet zusammen mit dem ersten Getrieberad eine erste Übersetzung, d.h. Gangstufe. Das zweite Motorantriebsrad bildet zusammen mit dem zweiten Getrieberad eine zweite Übersetzung und damit eine zweite Gangstufe, die von der ersten abweicht

Auf der Getriebewelle 6 ist des Weiteren ein erstes Abtriebsrad 8 angeordnet. Dieses ist im gezeigten Ausführungsbeispiel zwischen dem ersten und zweiten Getrieberad 7, 15 positioniert. Das erste Abtriebsrad 8 ist quer zur Fahrzeuglängsachse gesehen auf Höhe des Motors positioniert, wohingegen die beiden Motorantriebsräder seitlich des Motors positioniert sind. Das erste Abtriebsrad 8 ist Teil der Drehmomentübertragungseinrichtung, mittels welcher das Drehmoment von der Getriebewelle auf die Abtriebswelle übertragen wird. Als weitere Elemente weist die Drehmomentübertragungseinrichtung im gezeigten Ausführungsbeispiel eine Kette 12 sowie ein zweites Abtriebsrad 11 auf. Das erste Abtriebsrad 8 ist dauerhaft, d.h. permanent, drehfest mit der Getriebewelle verbunden um das Drehmoment von der Getriebewelle zu übertragen.

Des Weiteren ist an der Getriebewelle 6 eine Kupplungsanordnung 17 angeordnet. Diese wird im Ausführungsbeispiel der Figur 2 aus zwei Kupplungselementen gebildet, die jeweils wahlweise eine drehfeste Verbindung zwischen der Getriebewelle und dem ersten Getrieberad 7 oder der Getriebewelle und dem zweiten Getrieberad 15 herstellen können.

Ferner weist die Triebsatzschwinge 1 eine Abtriebswelle 10 auf, an der ein zweites Abtriebsrad 11 angeordnet ist. Das zweite Abtriebsrad 11 fluchtet mit dem ersten Abtriebsrad 8 und ist mit diesem im gezeigten Ausführungsbeispiel mittels einer Kette verbunden. Alternativ kann jedoch auch jede andere Art und Weise der Kraftübertragung, d.h. eine andere Drehmomentübertragungsvorrichtung, vorgesehen sein. Beispielsweise könnten die beiden Abtriebsräder als Zahnräder gestaltet sein und mittels einer Zahnradkaskade das Drehmoment zwischen Getriebewelle und Abtriebswelle übertragen. Auch die Nutzung einer Kardanwelle ist denkbar. Die Abtriebswelle 10 ist durch das Schwingengehäuse nach außen geführt, um die Montage eines Antriebsrads 2 zu ermöglichen.

Unabhängig von der konkret genutzten Drehmomentübertragungseinrichtung, ist diese dazu ausgelegt, den Abstand zwischen der Getriebewelle und der Abtriebswelle zu überbrücken. Die Drehmomentübertragungseinrichtung steht dabei bevorzugt dauerhaft, d.h. permanent mit der Getriebewelle drehfest in Verbindung.

Der Antriebsbereich 29 weist Mittel oder Vorrichtungen auf, mittels deren die Triebsatzschwinge am Fahrzeugrahmen befestigbar ist. Die Befestigungsmittel sind bevorzugt in einem Bereich des Antriebsbereichs positioniert, der nahe dem rahmenseitigen Ende des Antriebsbereichs liegt. Die Befestigungsmittel können aber beispielsweise auch auf derart positioniert sein, dass die Drehachse der Triebsatzschwinge beim Einfedern koaxial zur Motorwelle liegt. Auch kann vorgesehen sein, dass die Drehachse der Triebsatzschwinge zwischen der Motorwelle und der Abtriebswelle liegt.

Der Antriebsbereich 29 weist eine größere Breite B_{A}, d.h. Erstreckung quer zur Fahrzeuglängsachse 20 auf, als der Übertragungsbereich 30. Bevorzugt beträgt die Breite des Antriebsbereichs 29 das doppelte bis fünffache der Breite B_{Ü} des Übertragungsbereichs. Bevorzugt sind die Breiten des Antriebs- und Übertragungsbereichs derart gewählt, dass das Antriebsrad im Wesentlichen mittig des Motors angeordnet ist.

Des Weiteren weist der Antriebsbereich 29 eine Länge L_{A} und der Übertragungsbereich 30 eine Länge L_{Ü} auf, wobei als Länge die Erstreckung in Richtung der Fahrzeuglängsachse 20 gemeint ist. Die Länge L_{Ü} des Übertragungsbereichs ist üblicherweise durch den Durchmesser des verwendeten Antriebsrads vorgegeben. Die Länge des Übertragungsbereichs muss ausreichend sein, damit das Antriebsrad einen Mindestabstand zum Antriebsbereich einhält. Die Länge des Antriebsbereichs ist hingegen bevorzugt möglichst kurz. Dies ist mittels der gewählten Getriebeanordnung erreicht. Bevorzugt beträgt die Länge des Übertragungsbereichs das doppelte bis fünffache der Länge des Antriebsbereichs.

Die Getriebewelle (6) und die Abtriebswelle (10) sind in einem Abstand A1 zueinander angeordnet. Die Motorwelle (4) und die Getriebewelle (6) sind in einem Abstand A2 zueinander angeordnet. Für das Verhältnis von A1 zu A2, gilt: A1 / A2 > 1. Bevorzugt beträgt das Verhältnis A1 / A2 > 2, und besonders bevorzugt A1 / A2 > 4.

In der schematischen Darstellung nicht zu sehen ist beispielsweise die Bremseinrichtung an der Abtriebswelle 10, um das Fahrzeug abbremsen zu können, sowie die notwendigen Be- und Entlüftungsöffnungen im Schwingengehäuse sowie beispielsweise auch die notwendigen Kabeldurchführungen für den Elektromotor. Ebenfalls sind die Befestigungselemente bzw. -einrichtungen am Basiskörper 13 bzw. Schwingengehäuse nicht zu sehen, mittels derer die Triebsatzschwinge am Fahrzeugrahmen montierbar ist. Bevorzugt liegt die Motorwelle 4 koaxial zur Achse 26, um die die Triebsatzschwinge verschwenkbar ist. Dies sorgt dafür, dass beim Beschleunigen und Abbremsen des Motors keine störenden Antriebseinflüsse auf den Elektromotorroller wirken.

Ebenfalls nicht zu erkennen ist in der schematischen Darstellung die Möglichkeit zur Öffnung des Schwingengehäuses. Bevorzugt ist das Schwingengehäuse mindestens zweiteilig ausgeführt, wobei eine Teilungsebene entlang der Fahrzeuglängsachse 20 verläuft bzw. sich zumindest an dieser orientiert oder z.B. schräg zu dieser verläuft. Dabei kann das Schwingengehäuse horizontal sowie auch vertikal geteilt werden. Denkbar ist jedoch auch, Öffnungen im Getriebegehäuse vorzusehen, durch welche die Montage und Wartung der einzelnen Elemente ermöglicht ist.

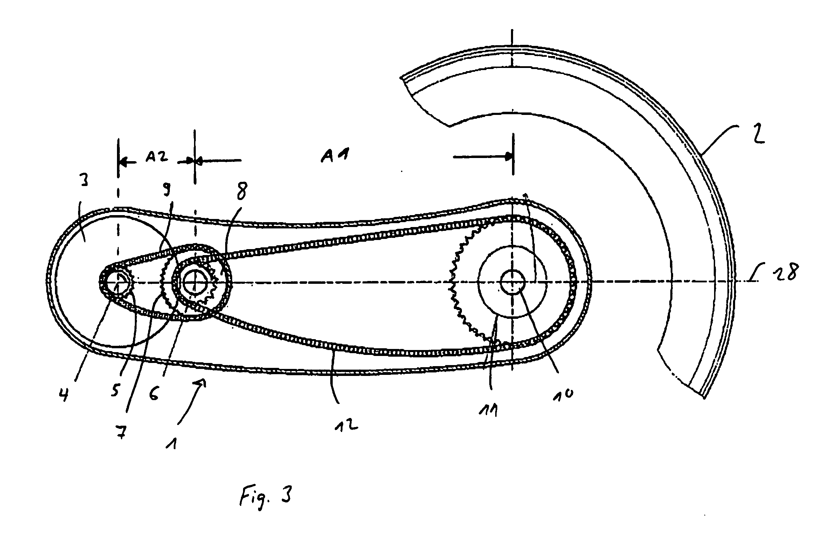

Fig. 3 zeigt eine schematische geschnittene Seitenansicht der Triebsatzschwinge 1. Zu sehen sind der Elektromotor 3, mit der Motorwelle 4 und dem ersten Motorantriebsrad 5, auf dem eine Kette 9 läuft. Angrenzend zum Elektromotor 3 verläuft die Getriebewelle 6 mit dem ersten Getrieberad 7, auf dem das Treibmittel 9 läuft. Ebenfalls auf der Getriebewelle 6 sitzt das erste Abtriebsritzel 8, auf dem eine Kette 12 angeordnet ist. Das erste Abtriebsrad 8 ist in der gezeigten Ausführungsform in der Ansicht der Fig. 3 hinter dem ersten Getrieberad 7 angeordnet, was jedoch aufgrund der schematischen Darstellung schwer erkennbar ist. Die Kette 12 überträgt das Drehmoment der Getriebewelle auf das zweite Abtriebsrad 11 sowie die Abtriebswelle 10, worüber wiederum das Antriebsrad 2 angetrieben ist. Wie in der Darstellung der Fig. 3 zu erkennen, sind die Motorwelle 4, Getriebewelle 6 sowie Abtriebswelle 10 entlang einer Linie 28 angeordnet. Dies hat sich als vorteilhaft erwiesen.

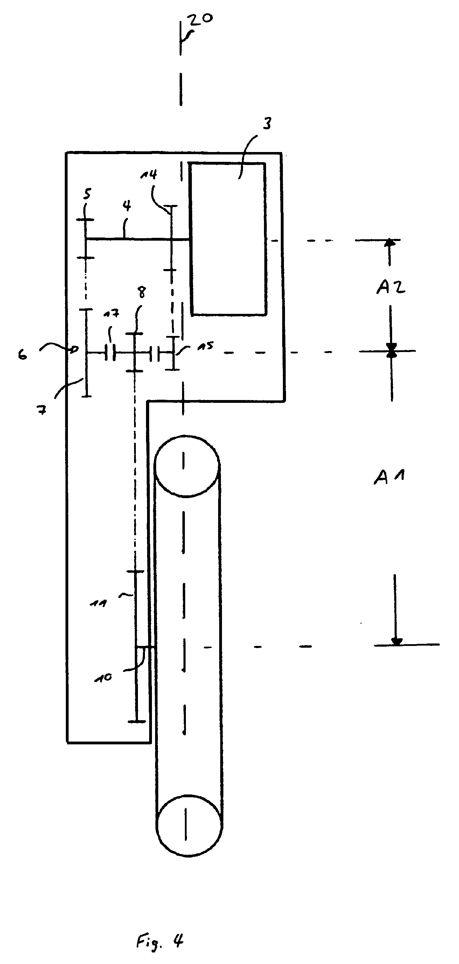

In Figur 4 ist auch die Anordnung der Getriebewelle relativ zum Motor und zur Motorwelle zu erkennen. Dabei ist der Abstand zwischen Motor und Getriebewelle derart gewählt, dass das Getrieberad 7 den Motor bzw. das Motorgehäuse zumindest in Teilbereichen überdeckt. D.h. die Summe der addierten Radien des Motorgehäuses und eines der Getrieberäder sind größer als der Abstand zwischen Motorwelle und Getriebewelle. Sofern das Motorgehäuse nicht rund ausgeführt ist, wird für die Berechnung der Summe die Erstreckung des Motorgehäuses auf einer gedachten Verbindungslinie zwischen Motorwelle und Getriebewelle genutzt. Eine solche Bauform führt zu einer sehr kompakten Triebsatzschwinge. Zur besseren Darstellung wurde in allen Figuren jedoch darauf verzichtet, die tatsächlich mögliche, sehr kompakte Bauweise zu zeigen.

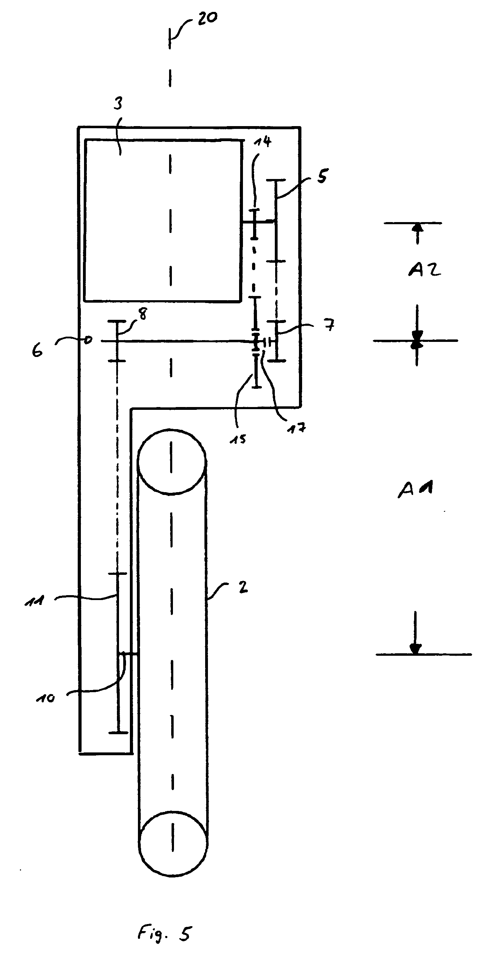

Im Folgenden werden anhand der Figuren 4 und 5 weitere Ausführungsformen der Triebsatzschwinge näher erläutert. Es soll im Folgenden nur auf die wesentlichen Unterschiede zu den vorangegangenen Ausführungsbespielen eingegangen werden. Deshalb werden für gleiche und wirkungsgleiche Bauelemente gleiche Bezugsziffern verwendet und entsprechend auf die vorangegangene Beschreibung verwiesen.

Die Ausführungsform der Triebsatzschwinge in Fig. 4 unterscheidet sich von der vorhergegangenen Ausführungsform durch die Anordnung der Motorantriebsräder sowie der Getrieberäder. In dieser Ausführungsform erstreckt sich die Motorwelle 4 des Elektromotors 3 lediglich zu einer Seite aus dem Motorgehäuse. Die Motorantriebsräder sind dabei zu der Seite des Motors angeordnet, auf der auch der Übertragungsbereich 30 der Triebsatzschwinge angeordnet ist. Die Motorantriebsräder sowie der Übertragungsbereich liegen also neben der Fahrzeuglängsachse 20 auf der gleichen Seite. Auf der Motorwelle 4 sind ein erstes Motorantriebsrad 5 und ein zweites Motorantriebsrad 14 angeordnet. Parallel zur Motorwelle 4 verläuft eine Getriebewelle 6, an welcher zwei Getrieberäder 7, 15 und ein erstes Abtriebsrad 8 angeordnet sind. Das erste Getrieberad 7 ist dem ersten Motorantriebsrad 5 zugeordnet und mit diesem über eine Kette verbunden. Das zweite Getrieberad 15 ist dem zweiten Motorantriebsrad 14 zugeordnet und ebenfalls mit einer Kette mit diesem verbunden. Des Weiteren weist auch die Getriebewelle dieser Ausführungsform eine Kupplungsanordnung 17 auf. Das erste Abtriebsrad 8 ist wie auch im ersten Ausführungsbeispiel mit einem zweiten Abtriebsrad 11 gekoppelt, welches eine Abtriebswelle 10 antreibt, welche wiederum das Antriebsrad 2 antreibt. Das erste Abtriebsrad 8 ist zwischen dem ersten Getrieberad 7 und dem zweiten Getrieberad 15 angeordnet.

Bei einer weiteren Ausführungsform der Triebsatzschwinge nach Figur 5 sind die beiden Motorantriebsräder 5, 14 ebenfalls lediglich zu einer Seite des Motorgehäuses angeordnet. Die Motorantriebsräder sind in dieser Ausführungsform jedoch nicht zu der Seite des Motors angeordnet, auf der sich auch der Übertragungsbereich 30 der Triebsatzschwinge befindet. Die Motorantriebsräder und der Übertragungsbereich sind auf unterschiedlichen Seiten der Fahrzeuglängsachse angeordnet. Die Motorantriebsränder übertragen das Drehmoment auf die Getrieberäder, wobei diese alle zu einer Seite der Fahrzeuglängsachse angeordnet sind. Mittels der Getriebewelle wird das Drehmoment dann zur anderen Seite der Fahrzeuglängsachse übertragen, wo es mittels der Abtriebsräder auf die Abtriebswelle übertragen wird. Das erste Abtriebsrad 8 ist in dieser Ausführungsform nicht zwischen den Getrieberädern 15, 17 positioniert.

Die Kupplungsanordnung der Ausführungsform der Figur 5 ist mittels zwei Kupplungselemeten gebildet. Das erste Kupplungselement ist zwischen dem zweiten Getrieberad 15 und dem ersten Getrieberad 7 angeordnet und kann das erste Getrieberad 7 von der Getriebewelle entkoppeln bzw. eine drehfeste Verbindung zur Getriebewelle lösen und herstellen. Das zweite Kupplungselement ist am zweiten Getrieberad 15 angeordnet. Dabei könnte die Getriebewelle beispielsweise durch das zweite Getrieberad 15 hindurch verlaufen, wobei das zweite Kupplungselement dazu dient, das zweite Getrieberad 15 mit der Getriebewelle zu verbinden.

Im Folgenden wird die Wirkungs- und Funktionsweise der Triebsatzschwinge näher erläutert. Die Wirkungs- und Funktionsweise ist bei den Ausführungsbeispielen der Triebsatzschwinge identisch. Entsprechend gelten die folgenden Ausführungen für alle Ausführungsformen.

Das Fahrzeug trägt eine Anzahl von Batterien bzw. Akkus, mittels derer der Elektromotor betrieben wird. Des Weiteren ist eine Steuerelektronik vorgesehen, mittels welcher die Drehzahl des Elektromotors geregelt bzw. gesteuert wird. Die Steuerelektronik kann dabei in der Triebsatzschwinge oder am Fahrzeug angeordnet sein. Bei Benutzung des Fahrzeugs wird z.B. mittels eines Gasgriffs die gewünschte Geschwindigkeit gewählt, woraufhin die Steuerelektronik die erforderliche Drehzahl des Elektromotors einstellt.

Die Triebsatzschwinge weist für den Anschluss an das elektrische System des Fahrzeugs Anschlüsse bzw. Durchbrechungen am Schwingengehäuse auf, durch welche die elektrische Verbindung erfolgen kann.

Im Betrieb treibt der Elektromotor mittels der Motorwelle 4 die mindestens zwei Motorantriebsräder 5, 14 an. In den gezeigten Ausführungsbeispielen sind die Motorantriebsräder 5, 14 an der Motorwelle angeordnet und mit dieser zumindest in Antriebsrichtung des Motors drehfest verbunden. Mittels der Ketten 9, 16 werden bei laufendem Elektromotor die Getrieberäder 7 und 15 angetrieben. Dreht sich die Motorwelle in Antriebsrichtung, so treibt sie sowohl das erste Getrieberad als auch das zweite Getrieberad 15 dauerhaft an.

Das auf diese Weise an die beiden Getrieberäder übertragene Drehmoment kann mittels des ersten Abtriebsrads auf das Antriebsrad übertragen werden, wobei mittels der Kupplungsanordnung 17 der jeweilige Gang bzw. das jeweils übertragende Getrieberad ausgewählt wird.

Anders ausgedrückt, ist jeweils immer nur ein Getrieberad drehfest mit der Getriebewelle 6 verbunden, wobei das andere Getrieberad zwar mittels eines Motorantriebsrads angetrieben ist, jedoch kein Drehmoment auf die Getriebewelle überträgt. Die Kupplungsanordnung kann in konventioneller Weise aufgebaut sein. Insbesondere wird eine elektronisch gesteuerte Kupplung bevorzugt. Hierbei kann der Bediener des Fahrzeugs beispielsweise den gewünschten Gang auswählen. Ebenso ist denkbar, dass die Steuerelektronik den Gangwechsel vorgibt und vollständig selbsttätig ausführt. Insbesondere ist die Kupplungsanordnung 17 deshalb derart ausgelegt, um den Gangwechsel automatisch, d.h. ohne Krafteinwirkung eines Benutzers durchzuführen. Hierzu könnte beispielsweise ein elektrischer Aktuator oder sonstige elektrohydraulische, elektropneumatische oder andere bekannte Aktuatoren genutzt werden. Die Kupplung ist bevorzugt bistabil gestaltet, d.h. sie verbleibt in ihrem Kupplungszustand, auch wenn kein Strom, Hydraulikdruck o.ä. anliegt.

Die Kupplungsanordnung kann eine Zahn- oder Lamellenkupplung umfassen. Denkbar ist auch die Nutzung einer sogenannten Klauenkupplung. Unabhängig von der gewählten Kupplungs- oder Schaltungsanordnung kann die Schaltbarkeit durch eine elektronische Abstimmung der jeweiligen Motordrehzahl und des Drehmoments erfolgen. Ebenso kann eine Fliehkraft-Schaltung oder Fliehkraft-Kupplung zum Einsatz kommen.

Denkbar wäre auch, die Kupplungsanordnung mit zwei Kupplungselementen zu versehen, wobei das erste Kupplungselement zwischen dem ersten Getrieberad 7 und dem ersten Abtriebsrad 8 positioniert ist, und das zweite Kupplungselement zwischen dem zweiten Getrieberad 15 und dem ersten Abtriebsrad 8 positioniert ist.

Das Schwingengehäuse 13 ist derart ausgestaltet, um eine Schmierung der sich in Bewegung befindlichen Ketten sicherzustellen. Insbesondere ist das Schwingengehäuse derart gestaltet, um eine vorgegebene Menge an Schmierflüssigkeit, z.B. Öl aufzunehmen und auf die Ketten aufzubringen. Hierzu kann beispielsweise eine Ölpumpe vorgesehen sein. Entsprechend kann für Wartungsarbeiten eine Wartungsöffnung bzw. Ablass- und Nachfüllöffnung im Schwingengehäuse vorgesehen sein. Des Weiteren können zur Einstellung der korrekten Spannung der genutzten Kette Einstellvorrichtungen vorgesehen sein, mittels derer beispielsweise die Position des Elektromotors, der Getriebewelle oder auch einer Spannschiene variiert werden kann. Bevorzugt erfolgt die Einstellung der Spannung der Kette bzw. der Ketten automatisch.

Die Triebsatzschwinge kann einen oder mehrere Freiläufe aufweisen. Mittels des mindestens einen Freilaufs wird im Schiebebetrieb, d.h. wenn die Drehzahl des Antriebsrads größer ist als die Drehzahl der Motorwelle, das Antriebsrad vom Elektromotor entkoppelt. Hierfür kann beispielsweise das erste und/oder zweite Abtriebsrad mit einem Freilauf versehen sein. Des Weiteren können aber auch die Kupplungsanordnung, beide Getrieberäder oder beide Motorantriebsräder einen Freilauf aufweisen. Bevorzugt ist der Freilauf als Element der Kupplungsanordnung vorgesehen.

Grundsätzlich kann für die Motor- und Getrieberäder jede Übersetzung gewählt werden, die für das zur Verfügung stehende Drehmoment und die gewünschte Endgeschwindigkeit sinnvoll erscheint. Es besteht allerdings auch die Möglichkeit, die Übersetzungen spiegelbildlich auszuführen, d.h. dass gilt 1/i₁ = i₂. Dabei bezeichnet i₁ die Übersetzung, die sich durch das erste Motorantriebsrad und erste Getrieberad ergibt und i₂ die Übersetzung, die sich durch das zweite Motorantriebsrad und zweite Getrieberad ergibt.

Eine weitere Möglichkeit zur Anordnung des Elektromotors besteht darin, diesen im Vergleich zur in Figur 2 gezeigten Anordnung um 90° zu drehen, so dass die Motorwelle quer zur Abtriebswelle verläuft. Die Getriebewelle wäre in diesem Fall ebenfalls quer zur Abtriebswelle angeordnet. Es ergäbe sich damit die Möglichkeit, das Drehmoment der Abtriebswelle mittels einer Kardanwelle zur Abtriebswelle zu leiten, wobei lediglich an der Abtriebswelle eine Umlenkung notwendig ist. Die Umlenkung wird bevorzugt mittels eines Kegelrads an der Kardanwelle und eines Tellerrads an der Abtriebswelle bewirkt. In diesem Fall wäre das Kegelrad das erste Abtriebsrad und das Tellerrad das zweite Abtriebsrad. Die Getriebewelle könnte derart angeordnet sein, dass sich eine mit der Kardanwelle im Wesentlichen koaxiale Ausrichtung ergibt. Eine weitere Vereinfachung des Getriebes ergibt sich, wenn die Kardanwelle nicht als separates Element ausgestaltet ist, sondern die Getriebewelle bis in den Bereich der Abtriebswelle verlängert ist und die Funktion der Kardanwelle übernimmt.

Die Triebsatzschwinge ist insbesondere derart gestaltet, dass sie sich nur zu einer Seite des Rads erstreckt und das Rad nur einseitig führt. Anders ausgedrückt, erstreckt sich vom Schwingendrehpunkt, d.h. der Befestigungsachse 26, entlang des Rades, d.h. zu einer Seite der Längsachse, lediglich die Triebsatzschwinge, und kein weiteres tragendes Element.

## Patentansprüche

1. Triebsatzschwinge (1) zum schwenkbaren Anbringen eines Antriebsrads (2) an einem Fahrzeugrahmen, insbesondere eines Elektromotorrollers, umfassend
mindestens einen Elektromotor (3) mit einer Motorwelle (4), die mindestens ein erstes, mit dieser drehfest verbindbares Motorantriebsrad (5) aufweist,
eine Getriebewelle (6), die mindestens ein erstes Getrieberad (7) aufweist, wobei das erste Motorantriebsrad (5) und das erste Getrieberad (7) mittels eines ersten flexiblen Treibmittels (9) verbunden sind, und
eine Abtriebswelle (10), die mittels einer Drehmomentübertragungseinrichtung mit der Getriebewelle verbunden ist, wobei mittels der Abtriebswelle (10) das Antriebsrad (2) antreibbar ist, sowie
einen Basiskörper (13), der verschwenkbar am Fahrzeugrahmen positionierbar ist, wobei in oder am Basiskörper (13) der Elektromotor (3), die Getriebewelle (6) und die Abtriebswelle (10) positioniert sind, und
an der Motorwelle (4) mindestens ein zweites, mit der Motorwelle (4) drehfest verbindbares Motorantriebsrad (14) positioniert ist und die Getriebewelle (6) mindestens ein zweites Getrieberad (15) aufweist und das zweite Motorantriebsrad (14) und das zweite Getrieberad (15) mittels eines zweiten flexiblen Treibmittels (16) verbunden sind,
und die Getriebewelle (6) eine Kupplungsanordnung (17) aufweist, mittels welcher zumindest wahlweise ein Drehmomentfluss vom ersten Motorantriebsrad (5) zur Abtriebswelle (10) oder vom zweiten Motorantriebsrad (14) zur Abtriebswelle (10) einstellbar ist, und
die Motorwelle (4) einen ersten und einen zweiten Endbereich (21 a, 21 b) aufweist, die sich beide aus dem Elektromotor (3) erstrecken, **dadurch gekennzeichnet, dass** am ersten Endbereich (21 a) mindestens das erste Motorantriebsrad (5) und am zweiten Endbereich (21 b) mindestens das zweite Motorantriebsrad (14) angeordnet ist.

2. Triebsatzschwinge (1) nach einem der vorhergehenden Ansprüche, wobei die mindestens zwei Motorantriebsräder (5,14) zumindest in Antriebsrichtung des Elektromotors (3) dauerhaft drehfest verbunden sind.

3. Triebsatzschwinge (1) nach einem der vorhergehenden Ansprüche, wobei die Drehmomentübertragungseinrichtung ein erstes Abtriebsrad (8) umfasst, das auf der Getriebewelle (6) positioniert ist und zwischen dem ersten Getrieberad (7) und dem zweiten Getrieberad (15) angeordnet ist.

4. Triebsatzschwinge (1) nach einem der vorhergehenden Ansprüche, wobei der Basiskörper (13) als Schwingengehäuse (13) ausgebildet ist, das zumindest die Getriebewelle (6) und die Abtriebswelle (10) zumindest bereichsweise umfasst.

5. Triebsatzschwinge (1) nach einem der vorhergehenden Ansprüche, wobei das erste Motorantriebsrad (5) und das erste Getrieberad (7) eine erste Über- oder Untersetzung aufweist und das zweite Motorantriebsrad (14) und zweite Getrieberad (15) eine zweite, von der ersten abweichende Über- oder Untersetzung aufweist.

6. Triebsatzschwinge (1) nach einem der vorhergehenden Ansprüche, wobei die Motorwelle (4), die Getriebewelle (6) sowie die Abtriebswelle (10) parallel zueinander ausgerichtet sind.

7. Triebsatzschwinge (1) nach einem der vorhergehenden Ansprüche, wobei die Motorwelle (4), die Getriebewelle (6) und die Abtriebswelle (10) quer zur Fahrzeuglängsachse (20) angeordnet sind.

8. Triebsatzschwinge (1) nach einem der vorhergehenden Ansprüche, wobei ein Freilauf vorgesehen ist, welcher das Antriebsrad (2) im Schiebebetrieb vom Elektromotor (3) entkoppelt.

9. Triebsatzschwinge (1) nach Anspruch 8, wobei der Freilauf ein Element der Kupplungsanordnung (17) ist.

10. Triebsatrschwinge (1) nach einem der vorhergehenden Ansprüche, wobei mindestens eines der flexiblen Treibmittel (9,16) eine Kette oder ein Riemen ist.

11. Triebsatzschwinge (1) nach einem der vorhergehenden Ansprüche, wobei die Drehmomentübertragungseinrichtung ein zweites Abtriebsrad (11) umfasst, das auf der Abtriebswelle (10) positioniert ist und erstes und zweites Abtriebsrad (8, 11) mittels eines dritten flexiblen Treibmittels (12) verbunden sind.

12. Triebsatzschwinge (1) nach einem der vorhergehenden Ansprüche, wobei die Getriebewelle (6) mit mindestens einem ersten Abtriebsrad (8) in Verbindung steht und die Abtriebswelle (10) mindestens ein zweites Abtriebsrad (11) aufweist, das mit dem ersten Abtriebsrad (8) zum Übertragen eines Drehmoments verbunden ist.

13. Triebsatzschwinge (1) nach einem der vorhergehenden Ansprüche, wobei für ein Verhältnis zwischen einem Abstand A1 zwischen der Getriebewelle (6) und der Abtriebswelle (10) und einem Abstand A2 zwischen der Motorwelle (4) und der Getriebewelle (6), gilt: A1/A2 > 1, bevorzugt A1/A2 >2, und besonders bevorzugt A1/A2 > 4.

14. Fahrzeug, insbesondere Elektromotonoller mit einer Triebsatzschwinge nach einem der Ansprüche 1 bis 13.

## Claims

1. Swinging arm motor unit (1) for pivotable mounting of a drive wheel (2) at a vehicle frame, in particular of an electric motor scooter, comprising at least one electric motor (3) with a motor shaft (4) having at least one first motor drive wheel (5) which can be connected in a twist-proof manner thereto, a transmission shaft (6) which has at least one first transmission wheel (7), wherein the first motor drive wheel (5) and the first transmission wheel (7) are connected by means of a first flexible drive means (9), and comprising an output shaft (10) which is connected by means of a torque transmission device to the transmission shaft, wherein the drive wheel (2) can be driven by means of the output shaft (10), and comprising a base body (13) which can be positioned at the vehicle frame in a pivotable manner, wherein the electric motor (3), the transmission shaft (6) and the output shaft (10) are positioned in or at the base body (13), and positioned at the motor shaft (4) is at least one second motor drive wheel (14) which can be connected in a twist-proof manner to the motor shaft (4) and the transmission shaft (6) has at least one second transmission wheel (15) and the second motor drive wheel (14) and the second transmission wheel (15) are connected by means of a second flexible drive means (16), and the transmission shaft (6) has a clutch arrangement (17) by means of which, at least optionally, a torque flow from the first motor drive wheel (5) to the output shaft (10) or from the second motor drive wheel (14) to the output shaft (10) is settable, and the motor shaft (4) has a first and a second end region (21a, 21b) which both extend out of the electric motor (3), **characterised in that** at least the first motor drive wheel (5) is arranged at the first end region (21a) and at least the second motor drive wheel (14) is arranged at the second end region (21b).

2. Swinging arm motor unit (1) according to claim 1, wherein the at least two motor drive wheels (5, 14) are permanently connected in a twist-proof manner at least in the drive direction of the electric motor (3).

3. Swinging arm motor unit (1) according to one of the preceding claims, wherein the torque transmission device comprises a first output wheel (8), which is positioned on the transmission shaft (6) and is arranged between the first transmission wheel (7) and the second transmission wheel (15).

4. Swinging arm motor unit (1) according to one of the preceding claims, wherein the base body (13) is configured as a pivoting housing (13) which at least partially surrounds at least the transmission shaft (6) and the output shaft (10).

5. Swinging arm motor unit (1) according to one of the preceding claims, wherein the first motor drive wheel (5) and the first transmission wheel (7) has a first step-up or step-down gearing and the second motor drive wheel (14) and the second transmission wheel (15) have a second step-up or step-down gearing different from the first gearing.

6. Swinging arm motor unit (1) according to one of the preceding claims, wherein the motor shaft (4), the transmission shaft (6) and the output shaft (10) are oriented parallel to one another.

7. Swinging arm motor unit (1) according to one of the preceding claims, wherein the motor shaft (4), the transmission shaft (6) and the output shaft (10) are arranged transversely to the vehicle longitudinal axis (20).

8. Swinging arm motor unit (1) according to one of the preceding claims, wherein a free-wheel unit is provided which decouples the drive wheel (2) from the electric motor (3) during overrun operation.

9. Swinging arm motor unit (1) according to claim 8, wherein the free-wheel unit is an element of the clutch arrangement (17).

10. Swinging arm motor unit (1) according to one of the preceding claims, wherein at least one of the flexible drive means (9, 16) is a chain or a belt.

11. Swinging arm motor unit (1) according to one of the preceding claims, wherein the torque transmission device comprises a second output wheel (11) which is positioned at the output shaft (10) and the first and second output wheels (8, 11) are connected by means of a third flexible drive means (12).

12. Swinging arm motor unit (1) according to one of the preceding claims, wherein the transmission shaft (6) is connected to at least one first output wheel (8) and the output shaft (10) has at least one second output wheel (11) which is connected to the first output wheel (8) for transmitting a torque.

13. Swinging arm motor unit (1) according to one of the preceding claims, wherein for a ratio of a distance A1 between the transmission shaft (6) and the output shaft (10) to a distance A2 between the motor shaft (4) and the transmission shaft (6), the following applies: A1/A2 > 1, preferably A1/A2 > 2 and particularly preferably A1/A2 > 4.

14. Vehicle, in particular electric motor scooter with a swinging arm motor unit according to one of the claims 1 to 13.

## Revendications

1. Bras oscillant (1) pour monter un pignon d'entraînement (2) pivotant sur un châssis de véhicule, en particulier de scooter électrique, comprenant
au moins un moteur électrique (3) avec un arbre moteur (4) qui comporte au moins un premier pignon moteur (5) pouvant être relié de manière solidaire en rotation audit arbre moteur,
un arbre de transmission (6) qui comporte au moins un premier pignon de transmission (7), dans lequel le premier pignon moteur (5) et le premier pignon de transmission (7) sont connectés à l'aide d'un premier moyen d'entraînement flexible (9), et
un arbre de sortie (10) qui est connecté à l'aide d'un dispositif de transfert de couple de rotation à l'arbre de transmission, dans lequel le pignon d'entraînement (2) peut être entraîné par l'arbre de sortie (10), et
un corps de base (13) qui peut être positionné de manière pivotante sur le châssis de véhicule, dans lequel le moteur électrique (3), l'arbre de transmission (6) et l'arbre de sortie (10) sont positionnés dans ou sur le corps de base (13), et
au moins un deuxième pignon moteur (14) connectable de manière solidaire en rotation à l'arbre moteur (4) est positionné sur l'arbre moteur (4), et l'arbre de transmission (6) comporte au moins un deuxième pignon de transmission (15), et le deuxième pignon moteur (14) et le deuxième pignon de transmission (15) sont connectés à l'aide d'un deuxième moyen d'entraînement flexible (16),
et l'arbre de transmission (6) comporte un ensemble d'accouplement (17) grâce auquel une transmission de couple du premier pignon moteur (5) à l'arbre de sortie (10) ou du deuxième pignon moteur (14) à l'arbre de sortie (10) peut au moins être réglée au choix, et
l'arbre moteur (4) comporte une première zone terminale et une deuxième zone terminale (21a, 21b) qui s'étendent et sortent toutes deux du moteur électrique (3), **caractérisé en ce qu'**au moins le premier pignon moteur (5) est agencé sur la première zone terminale (21a) et au moins le deuxième pignon moteur (14) est agencé sur la deuxième zone terminale (21b).

2. Bras oscillant (1) selon l'une des revendications précédentes, dans lequel lesdits au moins deux pignons moteurs (5, 14) sont connectés de façon à être durablement solidaires en rotation au moins dans la direction d'entraînement du moteur électrique (3).

3. Bras oscillant (1) selon l'une des revendications précédentes, dans lequel le dispositif de transfert de couple de rotation comporte un premier pignon de sortie (8) qui est positionné sur l'arbre de transmission (6) et est agencé entre le premier pignon de transmission (7) et le deuxième pignon de transmission (15).

4. Bras oscillant (1) selon l'une des revendications précédentes, dans lequel le corps de base (13) est constitué sous forme d'un carter oscillant (13) comportant au moins partiellement au moins l'arbre de transmission (6) et l'arbre de sortie (10).

5. Bras oscillant (1) selon l'une des revendications précédentes, dans lequel le premier pignon moteur (5) et le premier pignon de transmission (7) comportent une première multiplication ou réduction, et le deuxième pignon moteur (14) et le deuxième pignon de transmission (15) comportent une deuxième multiplication ou réduction différente de la première.

6. Bras oscillant (1) selon l'une des revendications précédentes, dans lequel l'arbre moteur (4), l'arbre de transmission (6) ainsi que l'arbre de sortie (10) sont orientés parallèlement entre eux.

7. Bras oscillant (1) selon l'une des revendications précédentes, dans lequel l'arbre moteur (4), l'arbre de transmission (6) et l'arbre de sortie (10) sont agencés perpendiculairement à l'axe longitudinal du véhicule (20).

8. Bras oscillant (1) selon l'une des revendications précédentes, dans lequel est pourvu un mécanisme de roue libre qui découple le pignon d'entraînement (2) du moteur électrique (3) lors d'un fonctionnement en roue libre.

9. Bras oscillant (1) selon la revendication 8, dans lequel la roue libre est un élément de l'ensemble d'accouplement (17).

10. Bras oscillant (1) selon l'une des revendications précédentes, dans lequel au moins un des moyens d'entraînement flexibles (9,16) est une chaîne ou une courroie.

11. Bras oscillant (1) selon l'une des revendications précédentes, dans lequel le dispositif de transfert de couple de rotation comporte un deuxième pignon de sortie (11) qui est positionné sur l'arbre de sortie (10), et le premier pignon de sortie (8) et le deuxième pignon de sortie (11) sont connectés au moyen d'un troisième moyen d'entraînement flexible (12).

12. Bras oscillant (1) selon l'une des revendications précédentes, dans lequel l'arbre de transmission (6) est connecté à au moins un premier pignon de sortie (8) et l'arbre de sortie (10) comporte au moins un deuxième pignon de sortie (11) qui est connecté au premier pignon de sortie (8) pour transmettre un couple.

13. Bras oscillant (1) selon l'une des revendications précédentes, dans lequel, pour un ratio A1/A2 d'une distance A1 entre l'arbre de transmission (6) et l'arbre de sortie (10) par une distance A2 entre l'arbre moteur (4) et l'arbre de transmission (6), A1/A2 > 1, de préférence A1/A2 > 2, et de préférence encore A1/A2 > 4.

14. Véhicule, en particulier scooter électrique, avec un bras oscillant selon l'une des revendications 1 à 13.
